# EUROPEAN PATENT SPECIFICATION

(11) **EP 3 482 331 B1**
(45) Date of publication and mention of the grant of the patent: **16.03.2022**
(21) Application number: 17739666.0
(22) Date of filing: 06.07.2017
(51) Int. Cl.: G06F 21/31, G06F 21/32

(54) **OBSCURING DATA WHEN GATHERING BEHAVIORAL DATA**
VERBERGUNG VON DATEN BEI DER ERFASSUNG VON VERHALTENSDATEN
OBSCURCISSEMENT DE DONNÉES LORS DE LA COLLECTE DE DONNÉES COMPORTEMENTALES

(30) Priority: 08.07.2016 GB 201611934
(43) Date of publication of application: 15.05.2019
(73) Proprietor: BioCatch Ltd., 6701104 Tel Aviv (IL)
(72) Inventor: NOVIK, Alesis, London Greater London E14 5AB (GB); SUTAS, Andrius, London Greater London E14 5AB (GB)
(74) Representative: Slingsby Partners LLP
(86) International application number: PCT/GB2017/051995
(87) International publication number: WO 2018/007821

(56) References cited:
- EP-A1- 2 541 452
- WO-A1-2015/127253
- US-A1- 2015 213 245

## Description

This invention relates to sensitively collecting data.

Identification and/or authentication of a user is an essential step in accessing many secure services or devices, such as banking, stored personal details or other restricted data. This identification and/or authentication is usually achieved by the use of passwords or personal identification numbers (PINs), which are usually assumed to be known only by the authorised user or users of a service or device.

However, in some systems knowledge of a user's password or PIN is enough for an unauthorised third party to gain access to the service or device. Thus, improved security measures have been introduced to identify and/or authenticate a user. Such measures include using biometric information about the user, for example, scanning a user's fingerprint, performing facial recognition or identifying a user through their behaviour. The behavioural biometric, in particular, requires behavioural data to be collected about the user so that: a) a user profile of an authorised user can be generated; and b) the behavioural data can be used to authenticate a user identity against the generated user profile. Furthermore, the collected behavioural data may also be used for other purposes such as marketing, medical and socioeconomic studies, etc. However, the collection of such data raises privacy and security issues for users, particularly when the user is performing a private or secure task such as entering a PIN number. There is, therefore, a need to collect behavioural data about users in a sensitive and secure manner.

WO 2015/127253 A1 describes a trust broker authentication method for mobile devices. A mobile device performs authentication with an authenticating entity. The mobile device includes sensors and a processor. The processor is configured to receive an authentication request from the authenticating entity requesting authentication information; and to determine if the authentication request satisfies predefined user privacy preferences. If so, the processor retrieves the authentication information from at least one sensor to form a trust vector in response to the authentication request, and commands transmission of the trust vector to the authenticating entity for authentication.

US 2015/0213245 A1 describes dynamic keyboard and touchscreen biometrics, and provides ongoing authentication using biometric data. Fingerprints and other biometric data are captured during the normal use of an electronic device, such as typing on a keyboard, and compared with associated reference biometrics to provide ongoing authentication to an application while the electronic device is being used. Comparison results are further combined with additional physiological or behavioral biometrics to determine a level of authentication encompassing multiple biometric inputs and types. According to a first aspect there is provided a method for collecting data comprising: at a user device comprising a sensor, the user device being capable of detecting by means of the sensor interaction by a user with any of a plurality of predefined user interface elements: generating a raw dataset from sensor data collected by the sensor as a result of a user input, the user interface elements with which the user has interacted being derivable from the raw dataset and the raw dataset including finer-level sensor data indicating the manner of the user's interaction with those elements; determining whether an element that the user interacted with in performing a task is sensitive or not; wherein an element is considered to be sensitive when the user interacts with the element when performing a sensitive task, wherein certain tasks are predefined as sensitive or have been set by the user as sensitive, and wherein the user device automatically determines the sensitivity of an element based on the format of the element; if it is determined that said element is not sensitive, then the method comprises sending the raw dataset to a remote computing device and/or locally storing the raw dataset; if it is determined that said element is sensitive, then the method comprises processing the raw dataset to obscure the sensitive element by forming an obscured dataset that obscures which user interface elements the user has interacted with and retain at least some of the finer-level sensor data; and transmitting the obscured dataset to a remote computing device and/or storing the obscured dataset at the user device.

The method may further comprise controlling the operation of the user device in dependence on the user interface elements interacted with by the user.

The raw dataset may comprise an identifier for each of the user interface elements with which the user has interacted; and the forming step may comprise obscuring each identifier.

Obscuring may comprise hashing or encrypting each identifier.

Obscuring may comprise removing each identifier.

The forming step may comprise transforming some of the sensor data in the raw dataset such that the user interface elements with which the user has interacted are not derivable by the remote computing device.

The sensor may be a touchscreen and the sensor data comprises locations of user touchpoints on the touchscreen; and the forming step comprises transforming the user touchpoint locations from absolute locations to relative locations.

The user interface element may be an object displayed on a screen.

The finer-level sensor data may include data representing one or more of: touch pressure, touch duration, touch time, touch direction and/or relative touch locations. The method may further comprise: at the remote computing device, receiving the obscured dataset and processing the retained data so as to determine a behavioural biometric for the user.

A system may be provided that is configured to perform the above method.

There may be provided computer program code for performing a method as claimed in any preceding claim. There may be provided non-transitory computer readable storage medium having stored thereon computer readable instructions that, when executed at a computer system, cause the computer system to perform the above method.

The above features may be combined as appropriate, as would be apparent to a skilled person, and may be combined with any of the aspects of the examples described herein.

The present invention will now be described by way of example with reference to the accompanying drawings. In the drawings:
Figure 1 shows an example of a user device.
Figure 2 shows a flow chart that illustrates an example of collecting data about a user.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

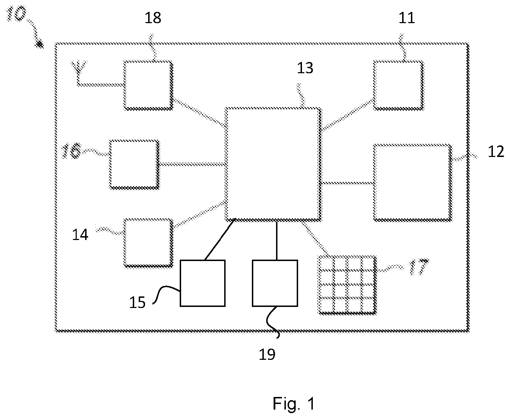

Figure 1 illustrates an example of a user device 10, which may be, for example, a smart device such as a smartphone or smartwatch, an ATM or other type of banking terminal, a payment terminal (such as a credit card machine) or any other suitable computing device. The device 10 may comprise a camera 11, a display 12, a processor 13, a non-volatile memory or ROM 14, working memory or RAM 15, one or more sensors 16, a user interface device 17 such a keypad or mouse and a communications interface 18 (which may a wired or wireless transceiver). In one example the display 12 may be a touchscreen which can display objects (also referred to as "elements" herein) on the screen that a user can interact with by touching the screen and/or by providing an input at user interface device 17. User inputs may be provided to the processor 13, which can process that input to control aspects the device's operation. The device may comprise a storage medium 19 such as flash memory. The ROM 14 may store program code that is executable by the processor 13. The program code may be stored in a non-transient form. The program code is executable by the processor to perform some or all of the processes and functions described herein. Some of the processes and functions described herein may be performed at a computing device or system that is remote to device 10, such as one or more servers or cloud computing devices. The distribution of the processing burden may at least partly depend on the computational capabilities of the device 10 and the remote computing device, and on the communication capabilities between the device 10 and the remote computing device and/or the availability of communications networks between those devices. Preferably, device 10 collects information and performs the majority of the processing on that information. Some of the processing may, however, be performed at the remote computing device.

The sensors 16 may be one or more sensors that are capable of gathering information about the user. For example, a GPS may be used to determine the location of the device and thus the user of the device. A motion sensor(s) (such as a gyroscope, accelerometer or pedometer) may be used to derive biometric information about the user of the device (e.g. by using the sensors to determine typical movements and motions made by the user). The sensors 16 could be biometric sensors such as a fingerprint sensor, iris scanner, etc. Other ways of determining information about the user via other means are possible, for example, facial recognition via camera 11 and voice recognition via a microphone (not shown). In the example of display 12 being a touchscreen, the touchscreen may also be considered to be a sensor which is able to sense user interactions with the touchscreen such as touch locations, touch pressure, touch duration and touch direction.

The processor 13 may receive information from the user or information gathered about the user via the user input devices, the camera, sensors and/or the communications interface. That information may be gathered, processed and sent to another device in a secure and sensitive manner, as described below.

As mentioned above, behavioural information about a user may be useful. Device 10 may sense and gather behavioural information about the user of device 10 and send (e.g. via communications interface 18) that information to another computing device (also referred to herein as a "data analyser"), such as a server, which may collect and analyse that data for various purposes (e.g. authentication or data analytics). The data analyser may be located remotely to device 10. In some scenarios, the device 10 may store the gathered information locally in addition to or alternatively to sending it to the data analyser.

Occasionally, a user of the device 10 may need to perform a task that is considered to be private or for security purposes. For example, a user may need to be identified and/or authenticated in order to securely access: the device 10 (e.g. unlocking the device), local functions on the device 10 (e.g. accessing files or programs stored at the device 10) or remote functions via device 10 (e.g. accessing online banking facilities or databases at a remote server via a communications connection on the device 10). When a user performs an identification and/or authentication process (e.g. entering a PIN number or password) behavioural data collected about that that user may also be sensed and collected. This collected data, however, could compromise the security of the identification and/or authentication process and/or the user's privacy if it was obtained by an unauthorised third party. For example, a device may be collecting data about a user's interaction with elements that are displayed on a touchscreen. When a user is prompted to enter a PIN number, the user touches numbers on the screen to enter their PIN number and the sensors generate information about that entry (e.g. touch locations, identifiers for the elements interacted with such as the numbers of the PIN, touch time). That sensed data gathered about the entry may be transmitted to a data analyser (e.g. for authentication). The transmitted data, if intercepted or obtained by an unauthorised third party, could be used to determine the user's PIN number. Therefore, as described further below, prior to sending the sensor data to the data analyser, the device 10 may obscure some of that data so that the data analyser (and, consequently, unauthorised third parties) cannot determine or derive the PIN number or other sensitive information from the sensor data.

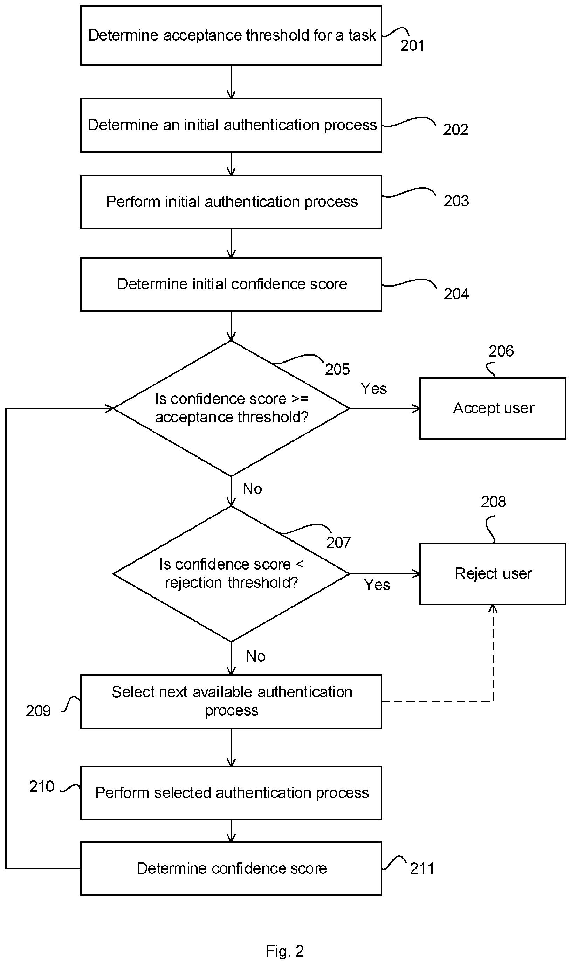

Figure 2 shows a flow diagram for sending sensor data in a sensitive and secure manner.

At step 201, a user of a device (e.g. device 10) may be performing a task on the device which involves interaction with elements of a user interface. For example, the task could be: unlocking a smartphone, accessing a banking app or composing an email; browsing the web. The elements may be any finite set of user interface features the interaction (e.g. by selection or actuation) with which by a user can be detected by the device. The elements may be spatially separated. Interaction with one of a set of spatially separated elements may be detected by the user moving his body or another object element into, into contact with or in proximity with that element. Examples of spatially separated elements include keys at a keyboard for the user to press, icons or characters on a touch screen that are displayed and are selectable by touching and spatial zones into which movement of the user's hand can be detected by movement sensors. The elements may be distinguished in a matter other than a spatial manner, for example temporally (by being presented one after another so the user can select one by performing a predetermined interaction when the element is presented) or logically. An example of logically separated elements is a set of vocal patterns which can be uttered by a user and detected by a microphone of the device to the device can determine which vocal pattern was heard. In one example, an element may be selected by touching the screen (if it is a touchscreen) at the location that the element is displayed on the screen or by moving a mouse to move a displayed cursor to the screen location of the element and pressing a button on the mouse. In other examples, the user interface elements could be buttons on a smartphone or voice commands (received via a microphone and processed by a suitable speech recognition algorithm) or any other suitable type of user input that it able to control the operation of the device 10.

At step 202, the user interaction with an element is detected by sensors at the device. The sensors may measure certain properties of the user's interaction with the device and/or environmental properties during the interaction. The data derived directly from the device sensors may also be referred to herein as sensor data. For example, if interacting with a touchscreen, the touch duration, touch timing, touch pressure, touch area and touch location coordinates may be detected and recorded. In another example, if interacting with a keyboard, the key pressed, the duration of the press, the timing of the press and the pressure applied may be detected and recorded. Other non-limiting examples of sensor data include accelerometer data, gyroscopic data, GPS co-ordinates, hover co-ordinates, heart rate monitor data, blood pressure monitor data, etc.

The sensor data may also be collected when the user is not consciously interacting with the device. For example, if the device is a mobile device, then sensor data may be collected while the device is in the user's pocket to provide information about, for example, the user's walking style or how they sit or stand. The sensor data may be collected continuously by the device (whether during interaction by the user or not).

At 203, a raw dataset is generated from the sensor data gathered during the user's interaction with the user interface elements. The raw dataset may include an element identifier which identifies which element the user has interacted with along with the sensor data generated during or as a result of the interaction. In a first example, a user may select (by touching) a character (e.g. character "X") displayed on a touchscreen when entering a password. This may generate a raw dataset comprising one or more of: an element identifier which identifies character "X", the location coordinates of the touch; the touch duration, the touch time; the touch pressure, the touch direction, etc. In some cases, the raw dataset that is generated may omit the element identifier which identifies character "X". In a second example, a user may select (by pressing) a key (e.g. key "Y") on a keyboard when entering a URL. This may generate a raw dataset comprising one or more of: an element identifier which identifies key "Y", the press duration, the press time and the press pressure.

At 204, it is determined whether or not the element this is interacted with by the user is sensitive or not. An element may be considered to be sensitive if the user is performing a task that is private or secure. For example, certain tasks may be predefined as being sensitive such as entering a PIN or password, accessing banking details, processing a transaction or private or incognito browsing. Elements interacted with for the sensitive tasks may thus also be considered to be sensitive. For example, characters that are part of a PIN code or password, an icon for a banking app, characters inputted during web browsing in secure modes (e.g. HTTPS) or privacy modes (e.g. private or incognito browsing) may be considered to be sensitive elements. In another example, a user may set certain tasks and thus certain elements as being sensitive. For example, a user may set an email account to be sensitive and so characters that used to compose emails from that account may be considered to be sensitive elements. In another example, the device 10 may automatically determine the sensitivity of an element. For example, if the user enters a 15/16 digit number, the device may infer that credit card details have been entered and thus deem the inputted numbers to be sensitive.

If it is determined that the element is not sensitive, the process moves directly to step 206, where the raw dataset may be sent to a remote computing device such as a data analyser and/or stored locally. If it is determined that the element is sensitive, the process moves to step 205, where the raw dataset is processed to obscure the sensitive element. For example, in the first example mentioned above, the element is character "X" which is part of a password and so it is determined that element "X" is sensitive. Thus the process moves on to step 205 for the raw dataset generated from the user interaction with element "X". In the second example mentioned above, the element is character "Y" which is part of a URL which is part of a browsing session that has no security or privacy requirements and so element "Y" is determined to be not sensitive. Thus, the process moves on to step 206 for the raw dataset generated from the user interaction with element "Y".

At step 205, the raw dataset is processed to obscure the sensitive element to provide an obscured dataset. The sensitive element is obscured so that the remote computing device or any third party device cannot determine or derive what the sensitive element is from the dataset. This helps prevent unauthorised third parties (such as a hacker) from determining sensitive or private information about the user should the third party gain access to the dataset transmitted to the remote computing device. As an example, in the first example mentioned above, the raw dataset comprises an element identifier which identifies password character "X" as well as the other sensor data. This identifier may be obscured by hashing the element identifier with a salt that may be randomly generated or stored at the user device. The obscured data set may then be generated by replacing the element identifier in the raw dataset with the hashed identifier. Alternatively, the obscured dataset may be generated by removing the element identifier from the raw dataset so that only the sensor data remains.

Furthermore, any sensor data that could be used to derive the sensitive element may also be obscured. For example, it may be possible to determine the identity of an element from its location on a touchscreen. In one example, device 10 may display a keypad/keyboard in the same location on the display each time a PIN/password is required. Thus, if the sensor data comprises touch location coordinates for a character in the keypad/keyboard, the touch location coordinates could be used to determine the character that is displayed at that location. Thus, the touch location coordinates may also be obscured. For illustration, the location coordinates may be obscured by hashing it or removing it from the dataset.

Alternatively, the absolute coordinates of a touch location in the screen space may be transformed to coordinates that are relative to another location. For example, the absolute coordinates for a touch location for may be obscured by making those coordinates relative to a predefined location for the selected element. In one example the predefined location for each element may be a centre point of that displayed element and the absolute coordinates may be transformed to be relative to the centre point of the selected element. The relative coordinates may be useful in determining a user's touch accuracy without revealing which element has been selected. In another example, the touch location coordinates may be obscured by making those coordinates relative to a set location relative to a specific element or to the elements as a whole, that set location being periodically randomised. The obscured dataset may then be formed by replacing the absolute touch coordinates with the relative touch coordinates in the raw dataset whilst retaining the other sensor data (e.g. touch time, touch duration, touch pressure).

In general, where the user interface elements are spatially separated, the device may be capable of gathering data that is additional to simply which elements have been interacted with. That additional data could, for example, be the timings of the interactions, the intervals between the interactions, the durations of the interactions, the speed with which an object has been moved by the user to or from an interaction with an element, the pressure of the interaction or spatial information about the user's interaction with the element at a higher spatial resolution than simply which element has been interacted with. In the case of a touch screen, the elements may be larger than the resolution of the touch screen, and the higher resolution spatial information may indicate where on an element the user has interacted with the element. Once that data has been gathered it can be processed to retain some or all of the additional data but to obscure or remove an identification of which elements were interacted with and/or the order in which the elements were interacted with. For example, for each element a reference location can be defined, the reference locations being in common offset relative to their respective locations (e.g. each in the centre of the respective element, or each at the top left corner of the respective element) and the location of each interaction with an element can be moderated by transforming it to a location relative to the respective reference location. Alternatively or in addition the order of the element interactions could be randomised.

In another example scenario, a user may be unlocking a smartphone via a fingerprint scanner. The raw dataset generated may include sensed data such as the fingerprint itself, the location of the finger on the scanner, the pressure applied, the duration that the finger is held at the scanner, the time of the scan and/or movement of the smartphone during scanning. In this example, the fingerprint may be considered to be the sensitive element and so the fingerprint is required to be obscured from the raw dataset to form an obscured dataset. The obscured dataset may be provided by removing the fingerprint data, encrypting the fingerprint data, scrambling the fingerprint pattern or performing any suitable processing of the raw dataset to prevent the fingerprint from being derivable from the obscured dataset alone.

At step 206, if it was determined that the element was not sensitive, the raw dataset may be transmitted to the remote computing device. If, however, it was determined that the element was sensitive, the obscured dataset may be transmitted to the remote computing device. Either dataset may be transmitted via communications interface 18 in real-time or stored in memory and transmitted at a later time.

In some implementations, at step 206, the raw or obscured dataset is stored locally instead of or in addition to transmitting the raw or obscured dataset to the remote computing device. For example, in some cases, the gathered information may be required to be stored locally, which could lead to the exposure of sensitive information such as a PIN code entry. Thus, the raw dataset may be obscured to form an obscured dataset, as described above, if it is determined that a sensitive element has been interacted with. The obscured dataset is then stored at device 10, e.g., at storage medium 19.

The remote computing device may store and process the received dataset for any suitable purpose. As mentioned above, the dataset could be used to derive behavioural information about the user. For example, the sensor data in the raw or obscured dataset may be processed to derive: a duration of touchscreen interaction; a physical touchscreen interaction distance; a time between touchscreen interactions; maximum, minimum and/or average deviation from a straight line during a touchscreen interaction; acceleration and/or deceleration of a touchscreen interaction; curvature of a touchscreen interaction; length of a touchscreen interaction (all derived from touchscreen associated data); background tremor while using the device; tremor during the interaction with the device (both derived from accelerometer and gyroscope data); device (and therefore user) movement speed (derived from device GPS coordinates and/or other device location service or services); and/or the orientation of the device (derived from magnetometer data). This derived information could be used for biometric profiling of the user.

The remote computing device receives either the raw dataset or the obscured dataset depending on the sensitivity of the element that the user has interacted with. The remote computing device may analyse this data to, e.g., determine a behavioural biometric for the user. By obscuring sensitive parts of the dataset, useful sensor data may still be collected about user when the user is performing a function that could be considered to be private or secure without compromising on the privacy or security of the user. This can be useful, for example, when behavioural biometrics are used as an additional authentication layer when identifying and/or authenticating a user during a local authentication process (such as entering a PIN/password) and the additional behavioural biometric authentication is carried out remotely.

The device of figure 1 is shown as comprising a number of functional blocks. This is schematic only and is not intended to define a strict division between different logic elements of such entities. Each functional block may be provided in any suitable manner.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, media processor, an application-specific integrated circuit (ASIC), a programmable logic array, a field-programmable gate array (FPGA), or the like. A computer or computer system may comprise one or more processors.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention, which is defined in the appended claims.

## Claims

1. A method for collecting data comprising:
at a user device (10) comprising a sensor (16), the user device (10) being capable of detecting by means of the sensor (16) interaction by a user with any of a plurality of predefined user interface elements (17):
generating a raw dataset from sensor data collected by the sensor (16) as a result of a user input, the user interface elements (17) with which the user has interacted being derivable from the raw dataset and the raw dataset including finer-level sensor data indicating the manner of the user's interaction with those elements;
determining whether an element that the user interacted with in performing a task is sensitive or not; wherein an element is considered to be sensitive when the user interacts with the element when performing a sensitive task, wherein certain tasks are predefined as sensitive or have been set by the user as sensitive, and wherein the user device automatically determines the sensitivity of an element based on the format of the element;
if it is determined that said element is not sensitive, sending the raw dataset to a remote computing device and/or locally storing the raw dataset;
if it is determined that said element is sensitive, processing the raw dataset to obscure the sensitive element by forming an obscured dataset that obscures which user interface elements the user has interacted with and retain at least some of the finer-level sensor data; and transmitting the obscured dataset to a remote computing device and/or storing the obscured dataset at the user device (10).

2. A method as claimed in claim 1,
further comprising controlling the operation of the user device (10) in dependence on the user interface elements (17) interacted with by the user.

3. A method as claimed in claim 1 or 2, wherein:
the raw dataset comprises an identifier for each of the user interface elements (17) with which the user has interacted; and the forming step comprises obscuring each identifier.

4. A method as claimed in claim 3,
wherein obscuring comprises hashing or encrypting each identifier.

5. A method as claimed in claim 3,
wherein obscuring comprises removing each identifier.

6. A method as claimed in any preceding claim,
wherein the forming step comprises transforming some of the sensor data in the raw dataset such that the user interface elements (17) with which the user has interacted are not derivable by the remote computing device.

7. A method as claimed in any preceding claim, wherein:
the sensor (16) is a touchscreen and the sensor data comprises locations of user touchpoints on the touchscreen; and the forming step comprises transforming the user touchpoint locations from absolute locations to relative locations.

8. A method as claimed in any preceding claim wherein the user interface element (17) is an object displayed on a screen.

9. A method as claimed in any preceding claim wherein the finer-level sensor data includes data representing one or more of: touch pressure, touch duration, touch time, touch direction and/or relative touch locations.

10. A method as claimed in any preceding claim further comprising:
at the remote computing device, receiving the obscured dataset and processing the retained data so as to determine a behavioural biometric for the user.

11. A system configured to perform the method of any preceding claim.

12. Computer readable code configured to perform the steps of the method of any of claims 1 to 10 when the code is run on a computer.

13. A computer readable storage medium having encoded thereon the computer readable code of claim 12.

## Patentansprüche

1. Verfahren zum Sammeln von Daten, umfassend:
an einem Benutzergerät (10), das einen Sensor (16) umfasst, wobei das Benutzergerät (10) in der Lage ist, mittels des Sensors (16) das Interagieren eines Benutzers mit einem beliebigen aus einer Vielzahl von vordefinierten Benutzeroberflächenelementen (17) zu erkennen:
Erzeugen eines Rohdatensatzes aus Sensordaten, die durch den Sensor (16) infolge einer Benutzereingabe gesammelt wurden, wobei die Benutzeroberflächenelemente (17), mit denen der Benutzer interagiert hat, aus dem Rohdatensatz ableitbar sind und der Rohdatensatz Sensordaten einer feineren Ebene beinhaltet, welche die Weise der Interaktion des Benutzers mit diesen Elementen angeben;
Ermitteln, ob ein Element, mit dem der Benutzer beim Durchführen einer Aufgabe zusammenwirkt, sensibel ist oder nicht; wobei ein Element als sensibel gilt, wenn der Benutzer beim Durchführen einer sensiblen Aufgabe mit dem Element interagiert,
wobei bestimmte Aufgaben als sensibel vordefiniert sind oder vom Benutzer als sensibel eingestellt wurden, und wobei das Benutzergerät automatisch die Sensibilität eines Elements basierend auf dem Format des Elements ermittelt;
wenn ermittelt wird, dass das Element nicht sensibel ist, Senden des Rohdatensatzes an ein entferntes Computergerät und/oder lokales Speichern des Rohdatensatzes;
wenn ermittelt wird, dass das Element sensibel ist, Verarbeiten des Rohdatensatzes, um das sensible Element zu verbergen, indem ein verborgener Datensatz gebildet wird, der verbirgt, mit welchen Benutzeroberflächenelementen der Benutzer interagiert hat, und zumindest einige der Sensordaten auf feinerer Ebene beibehält; und Übertragen des verborgenen Datensatzes an ein entferntes Computergerät und/oder Speichern des verborgenen Datensatzes auf dem Benutzergerät (10).

2. Verfahren nach Anspruch 1,
ferner umfassend das Steuern des Betriebs des Benutzergeräts (10) in Abhängigkeit von den Benutzeroberflächenelementen (17), mit denen der Benutzer interagiert.

3. Verfahren nach Anspruch 1 oder 2, wobei:
der Rohdatensatz eine Kennung für jedes der Benutzeroberflächenelemente (17) umfasst, mit dem der Benutzer interagiert hat; und
der Schritt des Bildens das Verbergen jeder Kennung umfasst.

4. Verfahren nach Anspruch 3,
wobei das Verbergen das Hashing oder Verschlüsseln jeder Kennung umfasst.

5. Verfahren nach Anspruch 3,
wobei das Verbergen das Entfernen jeder Kennung umfasst.

6. Verfahren nach einem der vorhergehenden Ansprüche,
wobei der Schritt des Bildens das Transformieren einiger der Sensordaten in dem Rohdatensatz umfasst, sodass die Benutzeroberflächenelemente (17), mit denen der Benutzer interagiert hat, nicht durch das entfernte Computergerät abgeleitet werden.

7. Verfahren, wie in einem der vorstehenden Ansprüche beansprucht, wobei:
der Sensor (16) ein Touchscreen ist und die Sensordaten Stellen von Benutzerberührungspunkten auf dem Touchscreen umfassen; und der Schritt des Bildens das Transformieren der Stellen von Benutzerberührungspunkten von absoluten Stellen zu relativen Stellen umfasst.

8. Verfahren nach einem der vorhergehenden Ansprüche, wobei das Benutzeroberflächenelement (17) ein Objekt ist, das auf einem Bildschirm angezeigt wird.

9. Verfahren nach einem der vorhergehenden Ansprüche, wobei die Sensordaten der feineren Ebene Daten beinhalten, die eines oder mehrere darstellen von: Berührungsdruck, Berührungsdauer, Berührungszeit, Berührungsrichtung und/oder relativen Berührungsstellen.

10. Verfahren nach einem der vorhergehenden Ansprüche, ferner umfassend:
an dem entfernten Computergerät, Empfangen des verborgenen Datensatzes und Verarbeiten der aufbewahrten Daten, sodass ein verhaltensbiometrisches Merkmal für den Benutzer ermittelt werden kann.

11. System, konfiguriert zum Ausführen des Verfahrens nach einem der vorhergehenden Ansprüche.

12. Computerlesbarer Programmcode, konfiguriert zum Ausführen der Schritte des Verfahrens nach einem der Ansprüche 1 bis 10, wenn der Programmcode auf einem Computer ausgeführt wird.

13. Computerlesbares Speichermedium, auf dem der computerlesbare Programmcode nach Anspruch 12 codiert ist.

## Revendications

1. Procédé de collecte de données comprenant :
au niveau d'un dispositif utilisateur (10) comprenant un capteur (16), le dispositif utilisateur (10) étant capable de détecter au moyen de l' interaction du capteur (16) par un utilisateur avec l'un quelconque d'une pluralité d'éléments d'interface utilisateur prédéfinis (17) :
la génération d'un ensemble de données brut à partir de données de capteur collectées par le capteur (16) en conséquence d'une entrée d'utilisateur, les éléments d'interface d'utilisateur (17) avec lesquels l'utilisateur a interagi pouvant être extraits de l'ensemble de données brutes et l'ensemble de données brutes comportant des données de capteur de niveau plus fin indiquant la manière de l'interaction de l'utilisateur avec ces éléments ;
le fait de déterminer si un élément avec lequel l'utilisateur a interagi lors de la réalisation d'une tâche est sensible ou non ; dans lequel un élément est considéré comme sensible lorsque l'utilisateur interagit avec l'élément lors de la réalisation d'une tâche sensible,
dans lequel certaines tâches sont prédéfinies comme sensibles ou ont été établies comme sensibles par l'utilisateur, et dans lequel le dispositif utilisateur détermine automatiquement la sensibilité d'un élément sur la base du format de l'élément ;
s' il est déterminé que ledit élément n'est pas sensible, l' envoi de l'ensemble de données brut à un dispositif informatique distant et/ou le stockage local de l'ensemble de données brut ;
s'il est déterminé que ledit élément est sensible, le traitement de l'ensemble de données brut pour masquer l'élément sensible en formant un ensemble de données masqué qui masque les éléments d'interface utilisateur avec lesquels l'utilisateur a interagi et conserve au moins certaines des données de capteur de niveau plus fin ; et la transmission de l'ensemble de données masqué à un dispositif informatique distant et/ou le stockage de l'ensemble de données masqué au niveau du dispositif utilisateur (10).

2. Procédé selon la revendication 1,
comprenant en outre la commande du fonctionnement du dispositif utilisateur (10) en fonction des éléments d'interface utilisateur (17) avec lesquels l'utilisateur a interagi.

3. Procédé selon la revendication 1 ou 2, dans lequel :
l'ensemble de données brut comprend un identifiant pour chacun des éléments d'interface utilisateur (17) avec lequel l'utilisateur a interagi ; et
l'étape de formation comprend le masquage de chaque identifiant.

4. Procédé selon la revendication 3,
dans lequel le masquage comprend le hachage ou le chiffrement de chaque identifiant.

5. Procédé selon la revendication 3,
dans lequel le masquage comprend l'élimination de chaque identifiant.

6. Procédé selon l'une quelconque des revendications précédentes,
dans lequel l'étape de formation comprend la transformation de certaines des données de capteur dans l'ensemble de données brut de telle sorte que les éléments d'interface utilisateur (17) avec lesquels l'utilisateur a interagi ne peuvent pas être extraits par le dispositif informatique distant.

7. Procédé selon l'une quelconque revendication précédente, dans lequel :
le capteur (16) est un écran tactile et les données de capteur comprennent des emplacements de points tactiles d'utilisateur sur l'écran tactile ; et l'étape de formation comprend la transformation des emplacements de points tactiles d'utilisateur d'emplacements absolus en emplacements relatifs.

8. Procédé selon l'une quelconque des revendications précédentes, dans lequel l'élément d'interface utilisateur (17) est un objet affiché sur un écran.

9. Procédé selon l'une quelconque des revendications précédentes, dans lequel les données de capteur de niveau plus fin comportent des données représentant un ou plusieurs parmi : une pression tactile, une durée tactile, un temps tactile, une direction tactile et/ou des emplacements tactiles relatifs.

10. Procédé selon l'une quelconque des revendications précédentes, comprenant en outre :
au niveau du dispositif informatique distant, la réception de l'ensemble de données masqué et le traitement des données conservées afin de déterminer une biométrie comportementale pour l'utilisateur.

11. Système configuré pour réaliser le procédé de l'une quelconque des revendications précédentes.

12. Code lisible par ordinateur configuré pour réaliser les étapes du procédé de l'une quelconque des revendications 1 à 10 lorsque le code est exécuté sur un ordinateur.

13. Support de stockage lisible par ordinateur sur lequel est codé le code lisible par ordinateur selon la revendication 12.
